# EUROPÄISCHE PATENTSCHRIFT

(11) **EP 0 839 715 B1**
(45) Veröffentlichungstag und Bekanntmachung des Hinweises auf die Patenterteilung: **19.03.2003**
(21) Anmeldenummer: 97118509.5
(22) Anmeldetag: 24.10.1997
(51) Int. Cl.: B64F 1/12

(54) **Verfahren und Vorrichtung zum Ankuppeln,insbesondere eines gelandeten Hubschraubers an eine Verfahreinrichtung**
Connection device, in particular to connect a landing helicopter to traverser
Dispositif d'accouplement, destiné en particulier à l'appontage d'un hélicoptère

(30) Priorität: 29.10.1996 DE 19644857
(43) Veröffentlichungstag der Anmeldung: 06.05.1998
(73) Patentinhaber: MBB Förder- und Hebesysteme GmbH, 27777 Ganderkesee (DE)
(72) Erfinder: Wendt, Heiner, 27777 Ganderkesee (DE); Gross, Ernst-Peter, 27578 Bremerhaven (DE)
(74) Vertreter: Möller, Friedrich, Dipl.-Ing.

(56) Entgegenhaltungen:
- EP-A- 0 219 664
- EP-A- 0 661 207
- EP-A- 0 709 287
- US-A- 4 295 740
- US-A- 4 588 150
- US-A- 5 123 615

## Beschreibung

Die Erfindung betrifft ein Verfahren zum Ankuppeln eines gelandeten Hubschraubers oder dergleichen an eine Verfahreinrichtung gemäß dem Oberbegriff des Patentanspruchs 1.
Verfahren der hier angesprochenen Art sind insbesondere beim Ankuppeln von Hubschraubern an Verfahreinrichtungen auf Schiffen bzw. auf Schiffsdecks im Einsatz. Üblicherweise weisen die Verfahreinrichtungen auf den Schiffsdecks Vorrichtungen auf, die manuell bedienbar sind. Greifmittel an den Verfahreinrichtungen sind dazu von einer Bedienperson über eine Steuerung manuell verfahrbar.

Aus der EP 0 219 664 A ist ein Schleppfahrzeug für Flugzeuge bekannt. Zunächst wird der Flugzeugtyp durch eine berührungslose Messung der Spurweite des Bugrades des Flugzeuges ermittelt. Die Einhaltung des für den Flugzeugtyp charakteristischen Wertes des Ausdrehwinkels zwischen der Fahrzeug- und Flugzeuglängsachse wird anschließend beim Schleppvorgang überwacht. Das Ankuppeln von Greifmitteln an das Flugzeug geht aus dieser Schrift nicht hervor.

Die US 5 123 615 A zeigt ein System, welches die Landung von Luftfahrzeugen, beispielsweise von Hubschraubern oder Senkrechtstartern, auf Schiffen erleichtern soll. Das System gibt dem Piloten eines Hubschraubers oder dergleichen eine Hilfestellung zur sicheren Landung auf dem Schiffsdeck. Es ist jedoch aus dieser Schrift auch nicht bekannt, Greifmittel einer Verfahreinrichtung über eine optische Einrichtung automatisch gesteuert an das Luftfahrzeug anzukuppeln.

Aus der EP 0 709 287 A ist schließlich eine Verfahreinrichtung mit verfahrbaren Greifmitteln, insbesondere für den Einsatz auf Schiffen, bekannt, wobei die Greifmittel zum Ankuppeln und Arretieren eines Hubschraubers an die Verfahreinrichtung ausgebildet sind. Es bleibt offen, wie die Greifmittel in Eingriff mit dem Hubschrauber gebracht werden.

Der Erfindung liegt die Aufgabe zugrunde, ein einfach arbeitendes Verfahren zum Ankuppeln des Hubschraubers oder dergleichen an der Verfahreinrichtung zu schaffen.

Ein Verfahren zur Lösung der Aufgabe weist die Maßnahmen des Patentanspruchs 1 auf. Dadurch, dass mindestens ein Greifmittel durch eine optische Einrichtung automatisch gesteuert wird, kann die Verfahreinrichtung unabhängig von der Landeposition des Hubschraubers automatisch an den Hubschrauber herangeführt und an diesen angekuppelt werden. Eine aufwändige Steuerung durch eine Bedienperson kann somit vermieden werden. Des weiteren ist die Genauigkeit des Ankuppelvorganges durch den Einsatz der optischen Einrichtung erhöht.

Durch die mindestens einem Greifmittel zugeordnete optische Einrichtung und einem mit der optischen Einrichtung korrespondierenden Reflexionsmittel am Hubschrauber oder dergleichen ist die Erkennung eines gelandeten Hubschraubers oder dergleichen realisiert. Die optische Einrichtung erlaubt eine einfache automatisierte Handhabung der Verfahreinrichtung bzw. der Greifmittel, indem sie automatisch an den gelandeten Hubschrauber oder dergleichen herangeführt und an diesen angekuppelt (angedockt) sowie verriegelt wird. Das reduziert den Zeitaufwand beim Ankuppeln und Verriegeln. Eine Bedienperson zur Bedienung der Steuerung bzw. zur visuellen Kontrolle ist somit überflüssig.

In einer vorteilhaften Weiterbildung der Erfindung ist die optische Einrichtung in vier Freiheitsgraden bewegbar. Dadurch kann der Hubschrauber in jeder beliebigen Landposition durch die optische Einrichtung geortet und entsprechend an die Verfahreinrichtung angedockt werden.

In einer weiteren Ausgestaltung der Erfindung weist die optische Einrichtung einen oszillierenden Spiegel - einen sogenannten Scanner - auf. Durch das vertikale Bewegen des oszillierenden Spiegels ist eine Lichtlinie erzeugbar, so dass der "Fangbereich" des Lichtstrahles einen Reflexionspunkt an dem Hubschrauber erfasst.

Das Reflexionsmittel ist vorzugsweise innerhalb einer Andockkugel im Bereich einer Hauptfahrwerksachse des Hubschraubers angeordnet. Dadurch ist das zielgenaue Ankuppeln der Greifmittel an den Hubschrauber gewährleistet.

Nach einer weiteren vorteilhaften Ausbildung der Erfindung ist mindestens einem Greifmittel ein Verriegelungsmechanismus zugeordnet, um eine sichere und leicht bedienbare Verriegelung zu schaffen.

In einer weiteren vorteilhaften Weiterbildung der Erfindung ist der Verriegelungsmechanismus an die Kontur der am Hubschrauber angeordneten Andockkugel angepasst. Durch die so erzielbare formschlüssige Verbindung wird die Sicherheit der Arretierung zwischen Hubschrauber und Verfahreinrichtung noch erhöht.

Bevorzugte Weiterbildungen der Erfindung ergeben sich aus den Unteransprüchen und der Beschreibung.

Nachfolgend wird ein bevorzugtes Ausführungsbeispiel der Erfindung anhand der Zeichnungen näher erläutert. In der Zeichnung zeigen:
- Fig. 1: eine Vorrichtung zum Ankuppeln eines gelandeten Hubschraubers an eine Verfahreinrichtung in perspektivischer Darstellung,

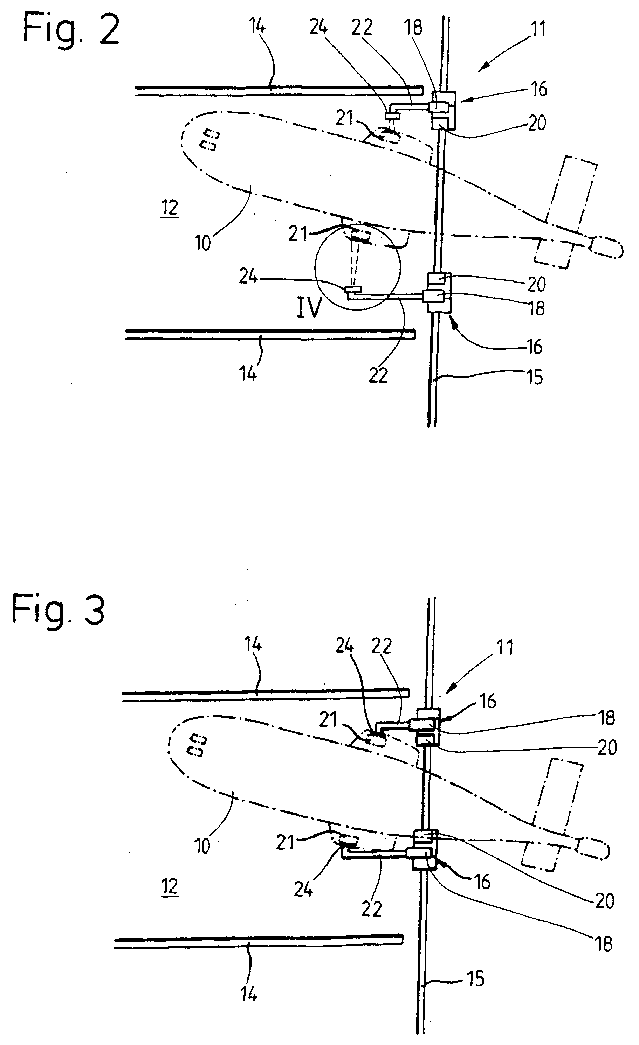

- Fig. 2 und 3: zwei aufeinanderfolgende Schritte während des Ortens und des Ankuppelns der Verfahreinrichtung an den Hubschrauber, und zwar jeweils in Draufsicht,

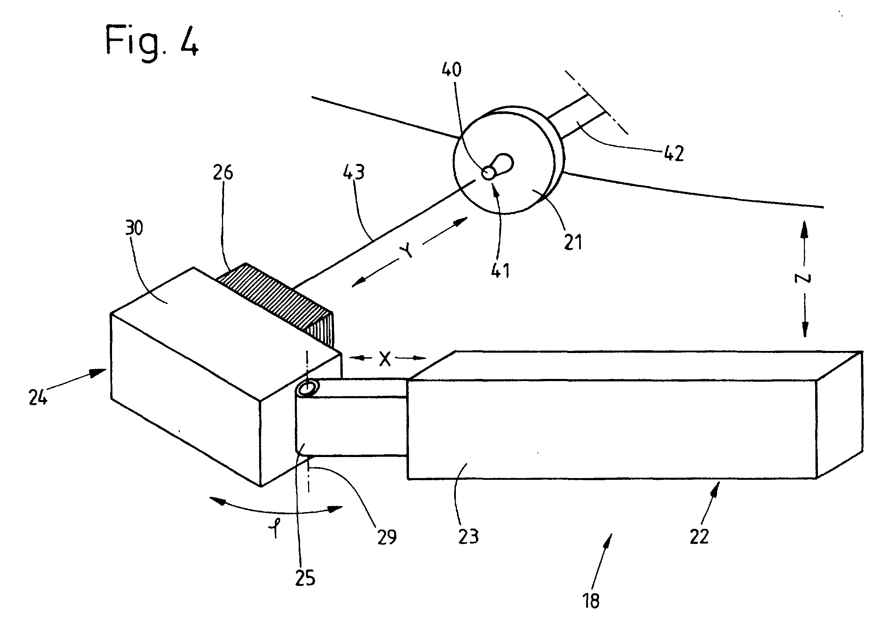

- Fig. 4: ein Greifmittel mit einer optischen Einrichtung gemäß dem Ausschnitt IV in Figur 2 in perspektivischer Darstellung,
- Fig. 5: eine Anordnung der Elemente der optischen Einrichtung in Draufsicht,
- Fig. 6: eine Anordnung der Elemente der optischen Einrichtung im Schnitt VI gemäß Fig. 5 in Seitenansicht,
- Fig. 7: einen Verriegelungsmechanismus im Schnitt in Seitenansicht, und
- Fig. 8: den Verriegelungsmechanismus gemäß Fig. 7 im Schnitt VIII.

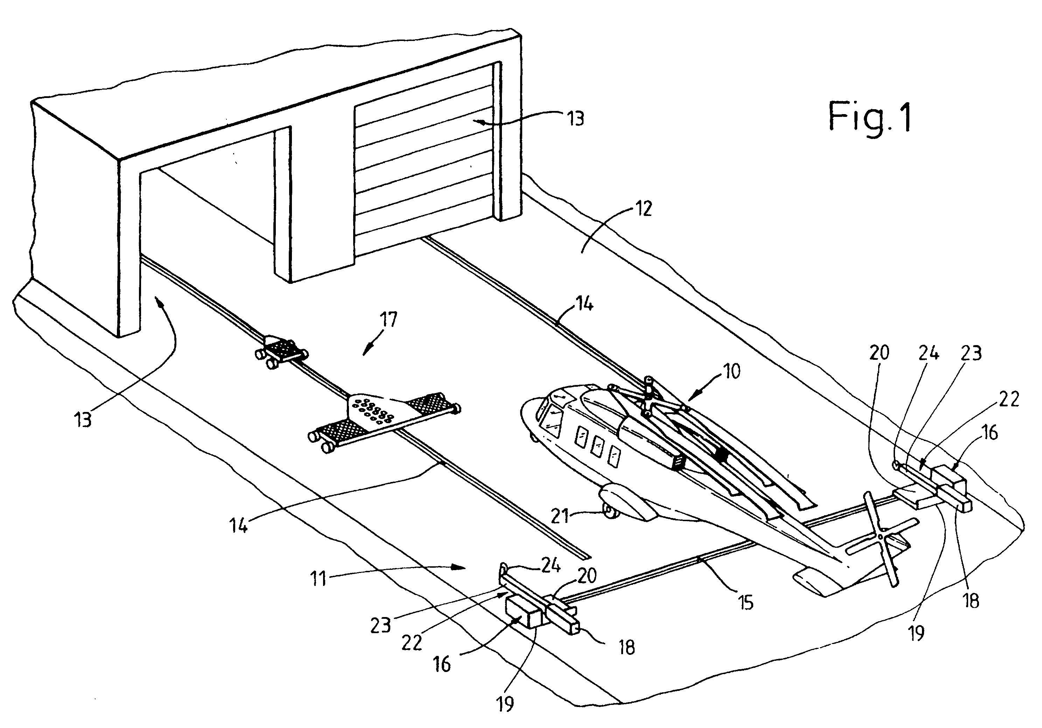

Die in Fig. 1 gezeigte Vorrichtung zum Ankuppeln eines Hubschraubers 10 an eine Verfahreinrichtung 11 befindet sich an Bord eines nur teilweise dargestellten Schiffs. Ein Teil des Decks des Schiffes dient als Plattform 12 zur Landung des Hubschraubers 10. Desweiteren sind im gezeigten Ausführungsbeispiel zwei Hangars 13 zur Unterbringung von Hubschraubern 10 vorgesehen.

Die gezeigte Plattform 12 verfügt über zwei Längsführungen 14, die in Längsrichtung des Schiffes verlaufen und in jeweils einen Hangar 13 führen. Den aus jedem Hangar 13 herausweisenden Enden der Längsführungen 14 ist eine gemeinsame Querführung 15 zugeordnet, die quer zur Längsrichtung des Schiffs verläuft. Die Querführung 15 bedient somit beide Längsführungen 14. Die Querführung 15, die auch als Doppelschiene ausgebildet sein kann, verfügt über zwei Querverfahrwagen 16. Entlang jeder Längsführung 14 ist ein verfahrbares Längslaufwerk 17 angeordnet, wobei in den Figuren nur das Längslaufwerk 17 einer Längsführung 14 dargestellt ist.

Auf jedem Querverfahrwagen 16 ist ein Greifmittel 18 angeordnet, und zwar fest verankert. An einer Grundplatte 19 der Querverfahrwagen 16 sind vier nicht dargestellte Fahrwerkswagen angeordnet. Die Grundplatte 19 verfügt weiterhin über jeweils eine Standfläche 20, auf die Hauptfahrwerksräder 21 des Hubschraubers 10 aufschiebbar sind.

Jedes Greifmittel 18 weist ein Teleskop 22, bestehend aus mehreren ineinander gesteckten Rohren, insbesondere Rechteckrohren, auf. An einem freien Ende eines inneren Rohres 23 befindet sich ein Telekopf 24. Der Telekopf 24 ist schwenkbar um ein Gelenk 25 an dem Greifmittel 18 angeordnet. Dem Telekopf 24 ist einerseits ein Verriegelungsmechanismus 26 zugeordnet, der im wesentlichen aus einem Andockblock 27 und einer verschiebbaren Falle 28 besteht. Der Andockblock 27 bildet den Anlenkpunkt an dem Hubschrauber 10. Die Falle 28 sichert die Greifmittel 18 an den beiden Längsseiten des Hubschraubers 10. Um einen gelandeten Hubschrauber 10 unabhängig von seiner Landeposition greifen und arretieren zu können, ist das Greifmittel 18 in vier Freiheitsgraden, nämlich in X-, Y- und Z-Richtung sowie um eine Drehachse 29 (Winkel ϕ) des Gelenks 25, bewegbar.

Andererseits weist der Telekopf 24 eine optische Einrichtung 30 als Teil eines Bildverarbeitungssystems 31 auf. Die optische Einrichtung 30 ist zu einem Teil in einem schützenden Gehäuse 32 angeordnet. Das Gehäuse 32 ist am Telekopf 24 auf der dem Hubschrauber abgewandten Seite des Andockblocks 27 montiert. Eine Durchgangsbohrung im Andockblock 27 bildet einen optischen Kanal 33 zwischen der optischen Einrichtung 30 des Bildverarbeitungssystems 31 und der Deckszenerie zum Durchtritt von Strahlung der optischen Einrichtung 30.

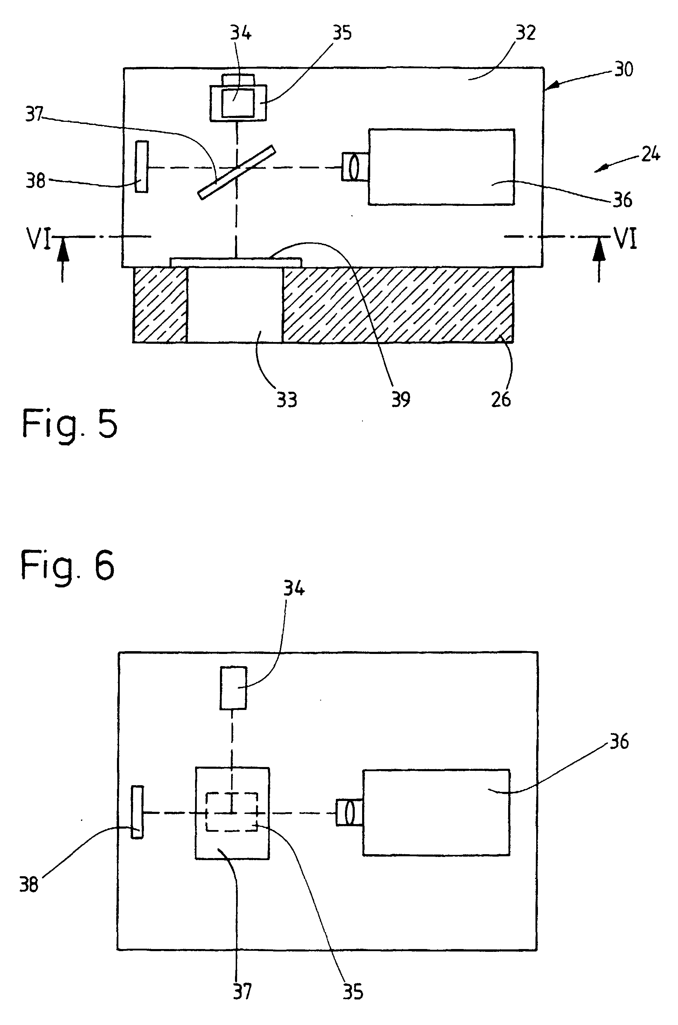

Die Figuren 5 und 6 stellen den Aufbau und die Elemente der optischen Einrichtung 30 dar. Die optische Einrichtung 30 besteht aus folgenden Komponenten: einem Laser-Diodenmodul 34, einem oszillierenden Spiegel 35 (Scanner), einer vorzugsweise quadratischen PSD-Kamera 36, einem semipermeablen Spiegel 37, einem linearen PSD-Element 38 sowie einer auf der dem Andockblock 27 zugekehrten Seite befindlichen Frontglasscheibe 39 im Bereich des Kanals 33. Eine weitere Komponente, nämlich ein Reflexionsmittel, der optischen Einrichtung 30 befindet sich am Hubschrauber 10. Das als Tripelprisma 40 ausgebildete Reflexionsmittel ist innerhalb einer Andockkugel 41 an beiden einander gegenüberliegenden Seiten einer Hauptfahrwerksachse 42, vorzugsweise an jedem Hauptfahrwerksrad 21 des Hubschraubers 10 angeordnet. Die Andockkugel 41 bildet hubschrauberseitig den Anlenkpunkt für die Greifmittel 18. Ein nicht dargestellter Scannerantrieb für den oszillierenden Spiegel 35 sowie ein ebenfalls nicht dargestellter Rechner zur Aufnahme und Verarbeitung der ermittelten Daten bilden zusammen mit der optischen Einrichtung 30 das komplette Bildverarbeitungssystem 31. Jedes Greifmittel 18 weist eine optische Einrichtung 30 auf. Korrespondierend dazu ist jeder Hubschrauber 10 mit einer entsprechenden Anzahl von Reflexionsmitteln, vorzugsweise an jedem Hauptfahrwerksrad 21, versehen.

Das Funktionsprinzip der optischen Einrichtung 30 ist im folgenden anhand der Fig. 5 und 6 beschrieben. Der optische Pfad beginnt am Laser-Diodenmodul 34, das einen punktförmigen Lichtstrahl 43 auf einer Wellenlänge von etwa 680 nm erzeugt. Über den in Vertilkalrichtung oszillierenden Spiegel 35 (Scanner) wird der Lichtstrahl 43 durch den semipermeablen Spiegel 37 und die Frontglasscheibe 39 durch den Kanal 33 in die Deckszenerie abgestrahlt. Durch die vertikale Bewegung des Spiegels 35 erscheint der Eindruck einer senkrecht im Raum stehenden Lichtlinie. Trifft diese Lichtlinie im Verlauf des Suchvorganges auf das in der Hauptfahrwerksachse 42 befindliche Tripelprisma 40, wird es von dort, gespiegelt an der optischen Achse des Tripelprismas 40, parallel zur Eintrittsrichtung reflektiert. Der reflektierte Lichtstrahl 43 tritt wiederum durch die Frontglasscheibe 39 in das Gehäuse 32 ein. Am halbdurchlässigen Spiegel 37 wird der Lichtstrahl 43 seitlich abgelenkt und trifft auf die PSD-Kamera 36. Durch die quadratische Ausführung der PSD-Kamera 36 ist eine zweidimensionale Messung möglich. Diese Anordnung ermöglicht es, die Ablage des reflektierten Lichtstrahls 43, relativ zur Sensormitte in Horizontal- und Vertikalrichtung zu bestimmen. Die optische Einrichtung 30 ist so justiert, daß der Lichtstrahl 43 im Mittelpunkt des Kanals 33 liegt, so daß das ermittelte Maß gleich der Abweichung zwischen Hauptfahrwerksachse 42 und Greifmittelachse ist. Ein nicht dargestellter Bildverarbeitungssystem-Rechner wandelt die errechneten Rohdaten in formatierte Daten um und sendet sie direkt über ein integriertes Feldbusinterface an einen übergeordneten Zentralrechner. Dort werden diese Signale als dynamische Regelabweichungen auf die Regelkreise geschaltet.

Die Steuerung aller Bewegungsorgane der Verfahreinrichtung 11, also auch der Greifmittel 18, erfolgt über servohydraulische Stellkomponenten. Die Bewegungszustände der einzelnen Achsen werden über zugeordnete Positionssensoren erfaßt. Die Sensorik besteht aus Weg- und Winkelmeßgebern für alle Achsen der Verfahreinrichtung 11, insbesondere einem dem Greifmittel 18 zugeordneten Weg-Meßsystem und einem innerhalb des ausgehöhlten Gelenks 25 angeordneten Drehwinkelgebers, induktiven Näherungsschaltern zur Detektion digitaler Positionszustände sowie dem Bildverarbeitungssystem 31. Die Sensoren sind direkt für den Betrieb am oben genannten Feldbusinterface konzipiert. Die Erfassung der Bewegungszustände erfolgt mit einschrittig kodierten digitalen Sensoren, so daß auf der gesamten Datenerfassungsstrecke eine maximale Störsicherheit gegeben ist.

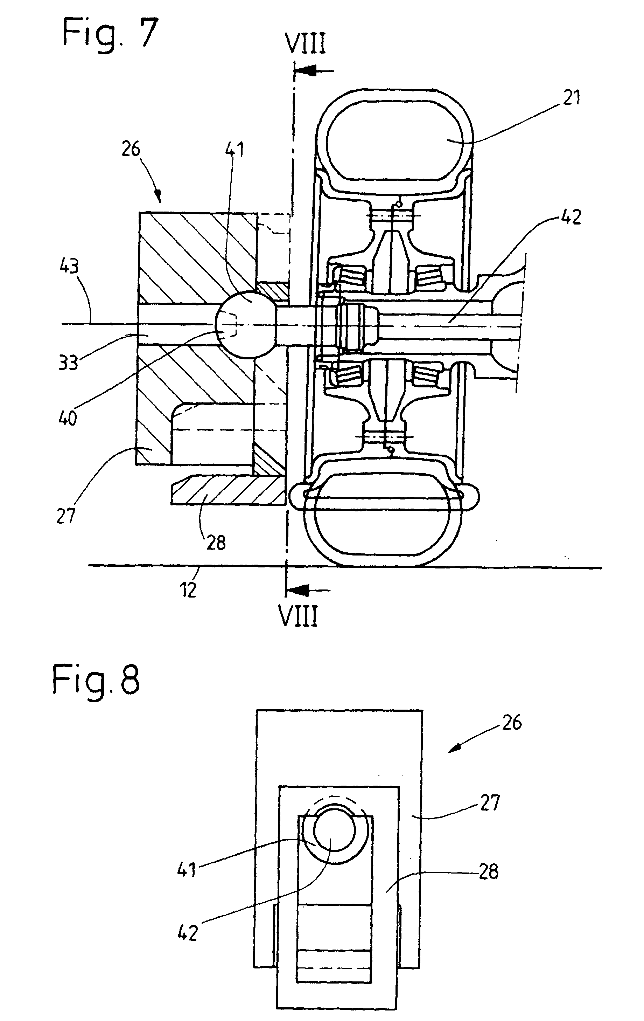

Gemäß der Fig. 7 weist der Telekopf 24 zusätzlich den Verriegelungsmechanismus 26 auf. Der Verriegelungsmechanismus 26 ist Bestandteil des beweglichen Schwenksystems um das Gelenk 25. Die Falle 28 ist in einer Führung über nicht dargestellte integrierte Hydraulikzylinder verfahrbar, insbesondere zum Öffnen und zum Schließen der Falle 28. Der Andockblock 27 sowie die Falle 28 sind an die Kontur der am Hubschrauberrad befindlichen Andockkugel 41 angepaßt. Durch die formschlüssige, lösbare Verbindung, einem sogenannten Kugel/ Kugelpfannen-Prinzip wird eine sichere Arretierung erreicht. Über die Andockkugeln 41 werden alle durch die Hubschrauber- und Schiffsbewegungen imitierten Kräfte sowie die aus der Gewichtskraft resultierenden Kraftkomponenten in die Greifmittel 18 eingeleitet. Durch die formschlüssige Verbindung ist somit eine vergleichmäßigte Krafteinleitung gewährleistet. Ist das Greifmittel 18 an der richtigen Position, daß heißt, ist die Andockkugel 41 in den Andocklock 27 eingebettet, verfährt der Hydraulikzylinder die Falle 28 in die Schließposition, derart, daß die Andockkugel 41 gegen horizontale Bewegung aus dem Andockblock 27 heraus, gesichert ist.

Ein Ankuppelvorgang mit dem Bildverarbeitungssystem 31 an den Greifmitteln 18 läuft wie folgt ab:

Nach dem Start der Bildverarbeitungssysteme 31 werden die Greifmittel 18 zunächst in Y-Richtung vorgefahren. Gleichzeitig mit den Y-Achsen werden die Z-Achsen soweit hochgefahren, daß das Tripelprisma 40 bei normalem Zustand der Hauptfahrwerksräder 21 an der oberen Bildkante erscheint. Das Z-Maß ergibt sich somit aus den Hubschrauber-typischen Daten, die dem Betriebsführungssystem-Programm durch eine üblicherweise einmalige Bedienereingabe bekannt sind. Anschließend werden die X-Achsen so lange teleskopiert, bis Kontakt mit dem Tripelprisma 40 hergestellt ist. Mit Auftreten des Kontaktes wird die X-Geschwindigkeit reduziert und die Sollwerte der Z-und X-Regler auf die nunmehr vom Bildverarbeitungssystem 31 übertragenen Regelabweichungen zuzüglich der Momentanposition umgeschaltet.

Auf dieser Position bleiben die X- und Z-Reglersollwerte vom Bildverarbeitungssystem 31 gesetzt, so daß dynamische Bewegungen permanent ausgeregelt werden. Nunmehr werden die Y-Achsen näher an das Objekt herangefahren. Dieser Schritt ist möglich, nachdem zuvor die Z-Achsen zentriert wurden. Nach Erreichen der Y-Positionen der Greifmittel 18 werden die X-Positionen als Mittelwert über einen im Sekundenbereich liegenden Zeitabschnitt ermittelt. Mit Hilfe dieser Werte läßt sich der Hubschrauber-Landewinkel und die Position des Hubschraubers 10 in X-Richtung errechnen. Anschließend erfolgt eine weitere Annäherung in Y-Richtung an die Tripelprismen 40. Nach Erreichen der neuen Y-Stellung befinden sich die Tripelprismen 40 zentriert im Bildbereich. Durch Verfahren um eine Strecke in X-Richtung von ca. 300 mm tritt im Bildverarbeitungssystem 31 eine Regelabweichung auf, die je nach Entfernung zum Tripelprisma 40 bis zum Kontaktverlust führen würde. Um die Tripelprismen 40 weiterhin zentriert zu halten, werden die Regelabweichungen des Bildverarbeitungssystems 31 in dieser Phase auf Alpha-Regler der Greifmittel 18 umgeschaltet. Das bewirkt, daß während des X-Verfahrens die Schwenkköpfe, nämlich die Teleköpfe 24, der Bewegung folgen. Nach dem Verfahren in X-Richtung werden über einen Mittelungszeitraum die Winkel der Teleköpfe 24 gemessen. Mit Hilfe der nunmehr vorliegenden Daten läßt sich der Abstand des Bildverarbeitungssystems 31 zum Tripelprisma 40 ermitteln. Im Falle einer unzureichenden Annäherung an das Tripelprisma 40 können die Triangulationen in kürzerer Distanz zu dem Tripelprisma 40 wiederholt werden.

Nunmehr werden die Sollwerte aller Regler so errechnet, daß die Teleköpfe 24 in einem Abstand von ca. 250 mm von den Tripelprismen 40 in der Hauptfahrwerksachse 42 zentriert positioniert werden. Alle Achsen werden gleichzeitig verfahren. Nach Erreichen der Endposition werden die Alpha-Regler auf den Landewinkel eingefroren, so daß Lasten über die Teleköpfe 24 übernommen aber keine Bewegungen mehr ausgeführt werden. Nun werden die errechneten Y-Abweichungen von den Y-Reglern angefahren. Da die Y-Bewegung automatisch Zentrierabweichungen der optischen Einrichtungen 30 zur Folge hat, diese wiederum die X-Regler beaufschlagen, fahren die Greifmittel 18 mit drei aktiven Achsen auf einer geraden Linie auf die Tripelprismen 40 zu. Um die Andockkugeln 41 gesichert, unter leichtem Druck in die Andockblöcke 27 zu bewegen, werden den Y-Reglern geringfügig überhöhte Sollwerte vorgegeben.

Die Verfahrvorgänge für alle drei aktiven Achsen werden sofort mit dem Ansprechen eines Andocks-Näherungsschalters beendet. Das Ansprechen eines Schalters bewirkt das Einfrieren der Regelersollwerte auf die Istwerte zum Ansprechzeitpunkt. Abschließend erfolgt die Verriegelung durch die Falle 28. Der Ankupplungsvorgang ist damit abgeschlossen und die Bildverarbeitungssysteme 31 werden gestoppt.

Der geschilderte Ankuppelvorgang erfolgt an jedem Hauptfahrwerksrad 21 des Hubschraubers 10, wobei die Ankuppelvorgänge der zu beiden Seiten der Hubschrauber 10 angeordneten Greifmittel 18 auch gleichzeitig erfolgen können.

Nach dem Ankuppeln wird der Hubschrauber 10 ausgerichtet und auf die Standflächen 20 der Querverfahrwagen 16 geschoben. Abschließend wird der Hubschrauber 10 in bekannter Weise manövriert und in einem der Hangars 13 hineingeführt.

Zum Starten der Hubschrauber 10 wird dieser mit dem Längslaufwerk 17 wieder aus dem Hangar 13 auf die Plattform 12 herausgefahren.

## Patentansprüche

1. Verfahren zum Ankuppeln eines gelandeten Hubschraubers (10) oder dergleichen an eine Verfahreinrichtung (11), wobei die Verfahreneinrichtung (11) mindestens ein verfahrbares Greifmittel (18) aufweist, das mit dem Hubschrauber (10) oder dergleichen verbindbar ist, **dadurch gekennzeichnet, dass** das oder jedes Greifmittel (18) durch eine optische Einrichtung (30) automatisch gesteuert an den Hubschrauber (10) oder dergleichen angekuppelt wird.

2. Verfahren nach Anspruch 1, **dadurch gekennzeichnet, dass** die optische Einrichtung (30) den Hubschrauber (10) oder dergleichen ortet und die Greifmittel (18) über Steuerungssysteme in die Ankuppel-Position verfährt.

3. Verfahren nach Anspruch 1 oder 2, **dadurch gekennzeichnet, dass** von der optischen Einrichtung (30) ein Lichtstrahl (43) erzeugt wird, und der Lichtstrahl (43) durch einen oszillierenden Spiegel geleitet wird zur Erzeugung einer Lichtlinie.

4. Verfahren nach Anspruch 1, **dadurch gekennzeichnet, dass** die durch die optische Einrichtung (30) ermittelten Daten in einem Rechner verarbeitet werden, derart, dass der Rechner die Greifmittel (18) an die Ankuppel-Position steuert, wobei die Greifmittel (18) vorzugsweise in mehreren Freiheitsgraden bewegt werden.

## Claims

1. Process by means of which a helicopter (10) or the like which has landed is coupled to a manoeuvring arrangement (11), the manoeuvring arrangement (11) having at least one manoeuvrable gripping means (18) which can be connected to the helicopter (10) or the like, **characterized in that** the or each gripping means (18) is coupled to the helicopter (10) or the like such that it can be controlled automatically by an optical arrangement (30).

2. Process according to Claim 1, **characterized in that** the optical arrangement (30) locates the helicopter (10) or the like and manoeuvres the gripping means (18) into the coupling position via control systems.

3. Process according to Claim 1 or 2, **characterized in that** the optical arrangement (30) produces a light beam (43), and the light beam (43) is directed through an oscillating mirror in order to produce a light line.

4. Process according to Claim 1, **characterized in that** the data determined by the optical arrangement (30) are processed in a computer such that the computer moves the gripping means (18) to the coupling position, the gripping means (18) preferably being moved in a number of degrees of freedom.

## Revendications

1. Procédé d'attelage d'un hélicoptère (10) ayant atterri ou d'un appareil semblable à un dispositif de déplacement (11), le dispositif de déplacement (11) présentant au moins un moyen mobile de préhension (18) qui peut être joint à l'hélicoptère (10) ou l'appareil semblable, **caractérisé par le fait que** le ou chaque moyen de préhension (18) est attaché à l'hélicoptère (10) ou l'appareil semblable avec commande automatique par un dispositif optique (30).

2. Procédé selon la revendication 1, **caractérisé par le fait que** le dispositif optique (30) repère l'hélicoptère (10) ou l'appareil semblable et amène les moyens de préhension (18) en position d'attache par l'intermédiaire de systèmes de commande.

3. Procédé selon l'une des revendications 1 et 2, **caractérisé par le fait que** le dispositif optique (30) produit un faisceau lumineux (43), et ce faisceau lumineux (43) est dirigé par un miroir oscillant pour la production d'une ligne lumineuse.

4. Procédé selon la revendication 1, **caractérisé par le fait que** les données déterminées par le dispositif optique (30) sont traitées dans un calculateur de façon telle que le calculateur mène les moyens de préhension (18) en position d'attache, les moyens de préhension (18) étant mus de préférence en plusieurs degrés de liberté.
